## Europäisches Patentamt
## European Patent Office
## Office européen des brevets

(11) Publication number: **0 153 909**
**B1**

(12) **EUROPEAN PATENT SPECIFICATION**

(45) Date of publication of patent specification: **07.12.88**

(51) Int. Cl.⁴: **F 16 K 15/10, F 04 B 39/10**

(21) Application number: **85830017.1**

(22) Date of filing: **28.01.85**

(54) On/off device for fluids.

(30) Priority: **31.01.84 IT 474284 u**

(43) Date of publication of application:
**04.09.85 Bulletin 85/36**

(45) Publication of the grant of the patent:
**07.12.88 Bulletin 88/49**

(84) Designated Contracting States:
**AT BE DE FR GB**

(56) References cited:
**DE-A-2 409 331**
**DE-A-2 642 658**
**DE-A-3 108 273**
**FR-A-2 329 915**
**GB-A-1 097 353**
**GB-A-1 534 118**
**GB-A-2 083 566**
**US-A-1 633 772**
**US-A-2 859 912**
**US-A-3 319 879**
**US-A-3 998 571**

(73) Proprietor: **Grillini, Marco**
**Via Murri 62**
**Bologna (IT)**

(72) Inventor: **Melloni, Sergio**
**Via delle Moline**
**Bologna (IT)**

(74) Representative: **Dall'Olio, Giancarlo**
**INVENTION s.n.c. Via Arienti 26**
**I-40124 Bologna (IT)**

Courier Press, Leamington Spa, England.

## Description

The invention is intended for utilizer means requiring devices or systems able to cause the flow and delivery of fluids to be initiated and suspended, and/or regulated cyclically, both in one single direction (system having only one on/off device) and in two opposite directions (system having two on/off devices).

In particular, therefore, it is intended for positive displacement air compressors that utilize blocking means (better known as valves) of the automatic type, with a flat seat, constituted, for example, by independent or interconnected concentric rings, or with a disk in which parallel slits form a grid, or else with oscillating blades.

On/off devices for fluids are known wherein, for the suction and delivery of the gas, use is made of disk valves arranged in a concentric and non-concentric fashion.

Each of the said disk has therein slots through which the flow regulated or non-regulated by the other disk passes.

With the said method, the delivery and suction flows are concentric.

On/off devices for fluids are known wherein use is made of disk valves which are arranged in a concentric or non-concentric fashion, for the suction and delivery of gas for instance.

Each of said disk has therein slots through which the flow passes.

Such devices described in GB—A—2 083 566, GB—A—1 097 353, provide a valve plate with particularly shaped blades or little plates fixed thereon.

Other on/off devices are disclosed in
GB—A—1 534 118, US—A—1 633 772,
US—A—3 998 571, US—A—2 859 912,
D—A—26 42 658, DE—A—24 09 331,
DE—A—31 08 273, FR—A—2 329 915.

Some of said devices (US—A—3998571), which provide one blade only for instance, use two plates to fix the blade, the first being located over and the second under the blade.

Each plate has a particular shape and must be different in respect of the other because it features holes and recesses in order to allow the blade to deform itself so that the gas can flow inside or outside the cylinder that has been sealed by the device.

Some devices (US—A—2859912), on the contrary, provide two separate blades fixed to one plate, but each blade is different from the other and is not fixed in the same place where the other is. This compels costly and complex method of fixing.

In the US—A—3 319 879 a device is discussed that comprises the features as recited in the first part of Claim 1. The shape of the blades requires a region that is larger than the section of the cylinder that is sealed by the device.

This involves the necessity of providing further spacing means between the plate and the cylinder block as well as between the plate and the head element.

The object of the invention is to make available an on/off device for fluids, particularly suitable for compressors, that is simple to produce and easy to assemble.

Another object of the invention is to make available an on/off device for fluids which, in the case of two separate fluids, makes it possible to render independent the said suction and delivery flows with a consequent optimisation of the ports through which the gas enters the cylinder of the compressor and issues therefrom.

The foregoing objects are achieved with the flapper valve assembly according to the invention as specified in Claim 1.

Further characteristics of the device will become apparent from the description that follows, with reference to the accompanying tables of drawings, in which:

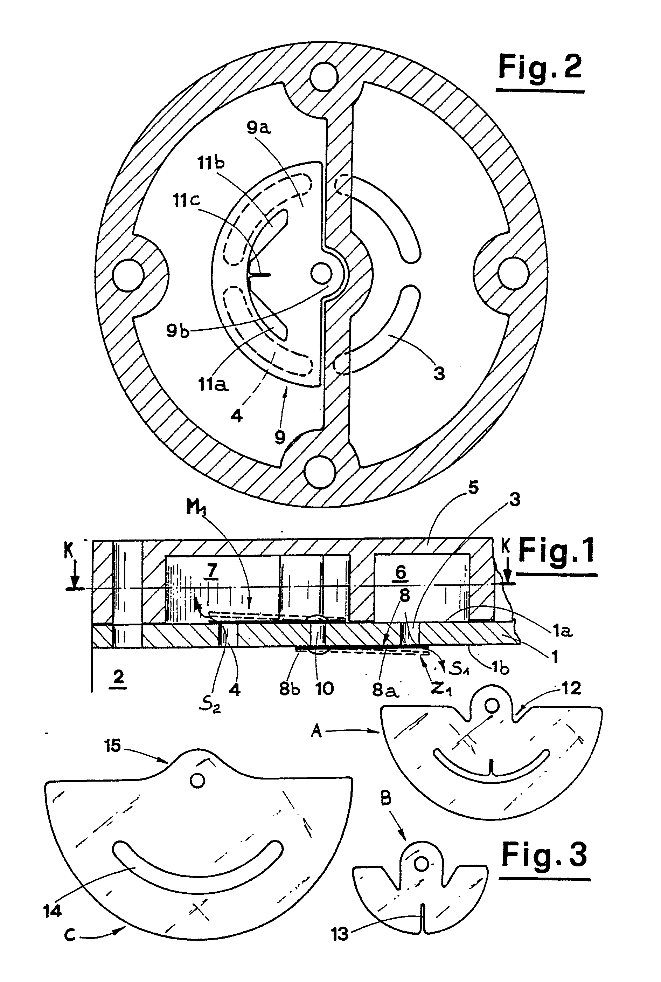

Fig. 1 shows, in an axial plane, a lateral sectional view of the said device connected to a positive displacement air compressor; Figure 2 shows, in a view from above, a section K—K of Figure 1; Figure 3 shows three further embodiments for the blade valves envisaged in the said device.

With reference to the said figures, shown at 1 is a plate for sealing one end of a corresponding cylinder shown globally at 2 since of a known type. In the plate 1 there are two pairs of slots 3 and 4, respectively, made in sides opposite with respect to an axial plane of the said plate. In the case under examination, the said slots are identical and concentric with the axis of the plate. Locked to the plate 1 in a known non-illustrated fashion, in the region of the outer side 1a thereof, is a cover 5 so shaped as to define, jointly with the said side 1a, two separate chambers 6 and 7 overhead of the said pairs of slots 3 and 4, respectively. The said chambers are connected, in a known non illustrated fashion, to corresponding manifolds, also not illustrated, for the suction and delivery, respectively, of the air directed into and coming from the chamber 2.

Shown at 8 and 9 are two identical blades, each of which is constituted by a spherical sector 8a, 9a and by a lobe 8b, 9b. Each lobe is situated on the opposite side to the corresponding sector, the radius thereof being considerably less than the radius of the sector.

By means of one element 10 (rivet, for example), both the blades 8 and 9 are locked, through the corresponding lobes 8b and 9b, to the plate 1 in the region of the axis of this.

More precisely, the blade 8 is in close contact with the inner side 1b of the plate 1 in such a way as to cover, with the corresponding sector 8a, the slots 3, while the blade 9 is in close contact with the outer side 1a of the said plate in such a way as to cover, with the corresponding sector 9a, slots 4.

The blades 8 and 9 define the suction valve and the delivery valve, respectively, of the device according to the invention, the seats of these being constituted by the sides of the plate 1. The said valves are of automatic type since, in order that the main functions thereof be performed, no external elements are needed.

When, in fact, the cylinder 2 is in the suction phase blade 8 is subjected to a force that causes the deformation thereof (by flexure and/or torsion) towards the inside of the cylinder; open position Z1 whereby there is a inflow (flow S1) of air from chamber 6 into the cylinder 2.

At the time the cylinder 2 is in the compression phase, blade 9 is subjected to a force that causes the deformation thereof (by flexure and/or torsion) towards the inside of chamber 7; open position M1 whereby there is an outflow (shown at S2) of air from the cylinder 2 to the chamber 7.

It is stressed that with the device in question (plate 1, blades 8 and 9, and cover 5) it is possible to render blades 8 and 9 independent (in other words, the flows S1 and S2 are not concentric but separate) and this is particularly interesting since it enables the suction ports (the slots 3) and the delivery ports (the slots 4) to be used optimally with all the notable advantages derived therefrom.

Thanks to the way in which the blades 8 and 9 are arranged, it is possible to reduce considerably clearances defined by the volume of the slots 4.

The way in which the blades 8 and 9 are designed makes possible the self limitation thereof as regards movement: in other words, it is not necessary to resort to springs for the purpose of delimiting the movement of the said blades which, in consequence of the arrangement of one with respect to the other, and of the particular shape of the plate 1, can be identical. The advantages of a solution of this nature will be obvious to experts in the field concerned.

Another advantage the device in question offers is constituted by the simplicity and speed at which assembly can be effected, this advantage being on account of the particular conformation of the valves.

In each of the blades 8 and 9 according to the embodiment depicted in Figures 1 and 2 there are two slits 11a and 11b symmetrical with respect to the plane of symmetry of the valve itself and these meet at a point where a further slit 11k extends towards the inside of the valve, in the region of the said plane of symmetry. The said slits affect positively the deformation ability of the blade and permit the passage there through of part of the corresponding flow S1 or S2.

In embodiment A in Figure 3, not only does the valve have therein the said slits 11a—11b—11c but also, in the region of the sections common to the semicircular sector and to the corresponding lobe, two re-entrant portions 12 symmetrical with respect to the plane of symmetry of the blade.

The said re-entrant portions are also present in embodiment B in Figure 3. In this case the semicircular sector has therein a slit 13 extending from the outside towards the inside, in the region of the plane of symmetry of the valve.

In embodiment C in Figure 3, provision is made for a slit 14, concentric with the semicircular sector of the valve and symmetrical with respect to the plane of symmetry of this, and for two curved sections 15 that link the said sector to the corresponding lobe: the concavity of the said sections pointing towards the said lobe.

The said embodiments A, B and C differ in dimensions since they relate to compressors of different powers.

## Claims

1. On/off device for fluid consisting of a flapper valve assembly comprising a valve plate (1) for sealing one end of a cylinder (2) of a corresponding utilizer means, having therein at least two slots (3, 4) made in sides opposite with respect to an axial plane of the said valve plate (1) for the suction of gas into and the delivery of gas from the said cylinder respectively, a cover (5) for sealing the said end, defining, with the outer side (1a) of the said valve plate (1), a suction chamber (6) and a delivery chamber (7) overhead of the said suction slot (3) and of the said delivery slot (4) respectively, a first blade (8) able to be deformed elastically by flexure and/or torsion, the seat of which is constituted by a corresponding part of the inner side (1b) of the said valve plate (1), with the said part comprising the said suction slot (3), a second blade (9) able to be deformed elastically by flexure and/or torsion, the seat of which is constituted by a corresponding part of the outer side (1a) of the said valve plate (1) with the said part comprising the said delivery slot (4), and elements (10) for locking the said blades (8, 9) to the said valve plate (1) in the region of the axis of this latter, wherein both of the said blades (8, 9) include spherical sector conformation to define a semicircle, the said blades being identical one with the other and comprising at least one slit; characterized in that each blade has one sector and one a lobe which is concentric with the said sector and connected thereto along curved sections having a concavity turned towards the same part of the lobe itself, in such a way that this latter is situated on the side opposite with respect to the sector, by means of which the blade is joined to the centre of the said valve plate (1) using one locking element (10) for both blades, the said slit (11; 14) lying within the sector being rounded and concentric with the said sector and symmetrical with respect to a plane of symmetry of this.

2. Device according to Claim 1, characterized by the fact that the said slit is subdivided into two slits (11a, 11b) which are symmetrical with respect to the plane of symmetry of the said sector and join together in the region of a further slit (11c) extending towards the inside of the said sector in the region of the said plane of symmetry.

3. On/off device for fluid consisting of a flapper valve assembly comprising a valve plate (1) for sealing one end of a cylinder (2) of a corresponding utilizer means, having therein at least two slots (3, 4) made in sides opposite with respect to an axial plane of the said valve plate (1) for the suction of gas into and the delivery of gas from the said cylinder respectively, a cover (5) for sealing the said end, defining, with the outer side (1a) of the said valve plate (1), a suction chamber (6) and a delivery chamber (7) overhead of the said suction slot (3) and of the said delivery slot (4) respectively, a first blade (8) able to be deformed elastically by flexure and/or torsion, the seat of which is constituted by a corresponding part of the inner side (1b) of the said valve plate (1), with the said part comprising the said suction slot (3), a second blade (9) able to be deformed elastically by flexure and/or torsion, the seat of which is constituted by a corresponding part of the outer side (1a) of the said valve plate (1) with the said part comprising the said delivery slot (4), and elements (10) for locking the said blades (8, 9) to the said valve plate (1) in the region of the axis of this latter, wherein both of the said blades (8, 9) include spherical sector conformation to define a semicircle, the said blades being identical one with the other and comprising one slit (13); characterized in that each blade has one sector and one lobe which is concentric with the said sector and connected thereto along curved sections having a concavity turned towards the same part of the lobe itself, in such a way that this latter is situated on the side opposite with respect to the sector, by means of which the blade is joined to the center of the said valve plate (1) using one locking element (10) for both blades, featuring at least one the said slit (13) originating at the outside of each blade (8, 9) and extending towards the inside symmetrically with respect to a plane of symmetry of the said sector.

4. Device according to Claim 2 or 3, characterized by the fact that each blade has thereon, in the region of the corresponding lobe, two re-entrant portions that extend symmetrically with respect to the plane of symmetry of the said sector.

**Patentansprüche**

1. Einschalt-/Ausschaltvorrichtung für Gase, bestehend aus einer Klappenbaugruppe mit einem Ventilteller (1) zum einseitigen Abdichten einer entsprechenden Verbrauchern zugeordneten Zylinders (2), in derem Innern mindestens zwei Schlitze (3, 4) auf beiden Seiten einer Axialebene des genannten Ventiltellers (1) angeordnet sind, mit dem Zweck, Gas in den genannten Zylinder anzusaugen bzw. aus dem genannten Zylinder abzulassen; einem Deckel (5) zum Abdichten der genannten Zylinderseite, der zusammen mit der Aussenseite (1a) des genannten Ventiltellers (1) über dem genannten Saugschlitz (3) bzw. dem genannten Austrittsschlitz (4) eine Saugkammer (6) und eine Druckkammer (7) bildet; eine erste durch Biegung und/oder Torsion verformbare Feder (8), deren Sitz aus einem entsprechenden Abschnitt an der Innenseite (1b) des genannten Ventiltellers (1) besteht, wobei genannter Abschnitt den genannten Saugschlitz (3) umfasst; eine zweite durch Biegung und/oder Torsion verformbare Feder (9), deren Sitz aus einem entsprechenden Abschnitt an der Aussenseite (1a) des genannten Ventiltellers (1) besteht, wobei genannter Abschnitt den genannten Druckschlitz (4) umfasst; schliesslich Element (10) zum Befestigen der genannten Federn (8, 9) am genannten Ventilteller (1) im Bereich der Ventiltellerachse, wobei beide Federn (8, 9) untereinander völlig identisch, Kreissektoren umfassen und einen Halbkreis bilden, sowie wenigstens einen Ausschnitt aufweisen, dadurch gekennzeichnet, dass jede Feder einen Sektor und einem zum genannten Sektor konzentrisch ausgebildeten und mit diesem entlang einer Kurve verbundenen Vorsprung sowie eine mit dem selben Vorsprung ausgerichtete Konkavität umfasst, und zwar so, dass dieser auf der gegenüberliegenden Seite des Sektors zu liegen kommt, durch den die Feder mit der Mitte des genannten Ventiltellers (1) über eine beiden Federn gemeinsame Befestigung (10) verbunden ist, wobei genannter im Sektor liegender Ausschnitt (11/14) konzentrisch zum genannten Sektor ausgerichtet und symmetrisch zur Symmetrieebene desselben angeordnet ist.

2. Vorrichtung gemäss Patentansprüch 1, dadurch gekennzeichnet, dass der genannte Ausschnitt aus zwei symmetrisch zur Symmetrieebene des genannten Sektors liegenden Teilabschnitten (11a, 11b) besteht, die sich an einem weiteren Ausschnitt (11c) treffen, wobei letzterer zur Innenseite des genannten Sektors im Bereich genannter Symmetrieebenen ausgerichtet ist.

3. Einschalt-/Ausschaltvorrichtung für Gase, bestehend aus einer Klappenbaugruppe mit einem Ventilteller (1) zum einseitigen Abdichten einer entsprechenden Verbrauchern zugeordneten Zylinders (2), in derem Innern mindestens zwei Schlitze (3, 4) auf beiden Seiten einer Axialebene des genannten Ventiltellers (1) angeordnet sind, mit dem Zweck, Gas in den genannten Zylinder anzusaugen bzw. aus dem genannten Zylinder abzulassen; einem Deckel (5) zum Abdichten der genannten Zylinderseite, der zusammen mit der Aussenseite (1a) des genannten Ventiltellers (1) über dem genannten Saugschlitz (3) bzw. dem genannten Austrittsschlitz (4) eine Saugkammer (6) und eine Druckkammer (7) bildet; eine erste durch Biegung und/oder Torsion verformbare Feder (8), deren Sitz aus einem entsprechenden Abschnitt an der Innenseite (1b) des genannten Ventiltellers (1) besteht, wobei genannter Abschnitt den genannten Saugschlitz (3) umfasst; eine zweite durch Biegung und/oder Torsion verformbare Feder (9), deren Sitz aus einem entsprechenden Abschnitt an der Aussenseite (1a) des genannten Ventiltellers (1) besteht, wobei genannter Abschnitt den genannten Druckschlitz (4) umfasst; schliesslich Elemente (10) zum Befestigen der genannten Federn (8, 9) am genannten Ventilteller (1) im Bereich der Ventiltellerachse, wobei beide Federn (8, 9) untereinander völlig identisch, Kreissektoren umfassen und einen Halbkreis bilden, sowie einen Ausschnitt (13) umfassen, dadurch gekennzeichnet, dass jede Feder einen Sektor und einen zum genannten Sektor konzentrisch ausgebildeten und mit diesem entlang einer Kurve verbundenen Vorsprung sowie eine mit dem selben Vorsprung ausgerichtete Konkavität umfasst, und zwar so, dass dieser auf der gegenüberliegenden Seite des Sektors zu liegen kommt, durch den die Feder mit der Mitte des genannten Ventiltellers (1) über eine beiden Federn gemeinsame Befestigung (10) verbunden ist, wobei genannter Sektor wenigstens einen, symmetrisch zu einer Symmetrieebene des genannten Sektors liegenden und zur Innenseite ausgerichteten Ausschnitt (13) mit Ursprung an der Aussenseite jeder Feder (8, 9) aufweist.

4. Vorrichtung gemäss Patentanspruch 2 oder 3, dadurch gekennzeichnet, dass jede Feder im Bereich des entsprechenden Vorsprungs zwei Einschnitte aufweist, die symmetrisch zur Symmetrieebene des genannten Sektor liegen.

## Revendications

1. Dispositif intercepteur de fluides, formé d'un groupe soupape à lame comprenant une plaque (1) de fermeture de l'extrémité d'un cylindre (2) d'u appareil annexe, possédant au moins deux fentes (3, 4), réalisées de part et d'autre d'un plan axial de ladite plaque (1), respectivement pour l'aspiration et pour le refoulement du gaz dans le cylindre et hors du cylindre susmentionné, un couvercle (5) de fermeture de cette extrémité, formant, avec la partie externe (1a) de cette plaque (1), une chambre d'aspiration (6) et une chambre de refoulement (7) placées respectivement au dessus des fentes d'aspiration (3) et de refoulement (4), une première lame (8), déformable élastiquement par flexion et/ou par torsion, dont le siège est constitué par une portion correspondant à la partie interne (1b) de la plaque (1), portion qui comprend ladite fente d'aspiration (3), une deuxième lame (9), pouvant se déformer élatiquement par flexion et/ou par torsion, dont le siège est constitué par une portion correspondant à la partie externe (1a) de la plaque (1), portion comprenant la fente de refoulement (4), et des éléments (10) pour le blocage de ces lames (8, 9) sur la plaque (1) dans l'axe de cette dernière, avec les deux lames (8, 9) dotées d'une forme circulaire pour définir un demi-cercle, ces lames étant toutes deux identiques et comprenant au moins une fente;

ce dispositif est caractérisé par le fait que chaque lame comprend un secteur et un lobe qui est concentrique avec ce secteur auquel il se rattache moyennant des sections curvilignes dont la concavité est tournée vers la même partie de ce lobe afin que ce dernier soit situé du côté opposé du secteur, au moyen duquel la lame est fixée au centre de la plaque (1) avec utilisation d'un seul élément de fixation (10) pour les deux lames, cette fente (11, 14), située dans le secteur, ayant la forme d'une courbe, concentrique avec ce secteur et symétrique par rapport au plan de symétrie de ce dernier.

2. Dispositif selon la revendication 1, caractérisé par le fait que la fente sus-indiquée est subdivisée en deux fentes (11a, 11b) qui sont symétriques par rapport au plan de symétrie du secteur mentionné et se rejoignent dans le secteur correspondant à une nouvelle fente (11c) cette dernière fente se prolongeant vers l'intérieur du secteur dans la zone dudit plan de symétrie.

3. Dispositif intercepteur de fluides, formé d'un groupe soupape à lame comprenant une plaque (1) de fermeture de l'extrémité d'un cylindre (2) d'un appareil annexe, possédant au moins deux fentes (3, 4), réalisées de part et d'autre d'un plan axial de ladite plaque (1), respectivement pour l'aspiration et pour le refoulement du gaz dans le cylindre et hors dudit cylindre, un couvercle (5) de fermeture de cette extrémité, formant avec la partie externe (1a) de cette plaque (1), une chambre d'aspiration (6) et une chambre de refoulement (7), placées respectivement au dessus des fentes d'aspiration (3) et de refoulement (4), une première lame (8), pouvant se déformer élastiquement par flexion et/ou par torsion, dont le siège est constitué par une portion correspondant à la partie interne (1b) de la plaque (1), portion qui comprend ladite fente d'aspiration (3), une deuxième lame (9), déformable élastiquement par flexion et/ou par torsion, dont le siège est formé d'une portion de ladite partie externe (1a) de la plaque (1) sus-indiquée, portion comprenant la fente de refoulement (4), et des éléments (10) pour le blocage des lames citées (8, 9) sur la plaque (1), en correspondance avec l'axe de cette dernière, avec les deux lames (8, 9) dotées d'une forme circulaire pour définir un demi-cercle, ces lames étant toutes deux identiques et comprenant une fente (13); ce dispositif est caractérisé par le fait que chaque lame comprend un secteur et un lobe qui est concentrique avec ce secteur auquel il se rattache avec des sections curvilignes dont la concavité est tournée vers le même côté de ce lobe, afin que le lobe soit situé du côté opposé au secteur, au moyen duquel la lame est fixée au centre de la plaque (1) avec utilisation d'un seul élément de fixation (10) pour les deux lames; cette fent (13) part du bord de chaque lame (8, 9) et se prolonge vers l'intérieur, symétriquement par rapport au plan de symétrie de ce dernier.

4. Dispositif selon la revendication 2 ou 3, caractérisé par le fait que chaque lame est intéressée, dans la région du lobe correspondant, à deux renfoncements symétriques par rapport au plan de symétrie du même secteur.

Fig. 2

Fig. 1

Fig. 3